# EUROPEAN PATENT APPLICATION

(11) **EP 4 803 801 A1**
(43) Date of publication of application: **09.09.2026**
(21) Application number: 25741453.2
(22) Date of filing: 13.01.2025
(51) Int. Cl.: F21V 8/00

(54) **VEHICLE-MOUNTED AMBIENT LAMP**

(30) Priority: 16.01.2024 CN 202420108349 U
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: ZHANG, Shuai, Ningbo, Zhejiang 315899 (CN); CHEN, Chaojun, Ningbo, Zhejiang 315899 (CN); HUANG, Jun, Ningbo, Zhejiang 315899 (CN); LIN, Xianghui, Ningbo, Zhejiang 315899 (CN)
(74) Representative: Michalski Hüttermann & Partner mbB
(86) International application number: PCT/CN2025/072032
(87) International publication number: WO 2025/152892

(57) **Abstract**

A vehicle-mounted ambient lamp includes: a power substrate (12); a bottom cover (10) disposed on a side of the power substrate (12); a protective cover (11) disposed on a side of the power substrate (12) away from the bottom cover (10); a light source (13) disposed on the power substrate (12); and an optical lens (14) disposed between the light source (13) and the protective cover (11), where the optical lens (14) includes a bottom portion (141) and at least two protruding portions (142), the protruding portions (142) are disposed on the same side of the bottom portion (141), and an axis of each of the protruding portions (142) is perpendicular to the bottom portion (141). The optical lens (14) further includes a light shielding member (15), the light shielding member (15) is disposed on the bottom portion (141), the light shielding member (15) and the protruding portions (142) are disposed on the same side of the bottom portion (141), and the light shielding member (15) is filled between adjacent protruding portions (142) and also covers an edge of the bottom portion (141), so that the bottom portion (141) becomes an opaque component, light emitted by the light source (13) is prevented from being transmitted out of the bottom portion (141). Thus, the light is concentrated on the protruding portions (142), enabling the ambient lamp to present the light emitting effect of black and white piano keys.

## Description

### CROSS-REFERENCE TO RELATED APPLICATIONS

The present disclosure claims priority to Chinese Patent Application No. 202420108349.6, entitled "VEHICLE-MOUNTED AMBIENT LAMP" and filed with CNIPA on January 16, 2024, which is incorporated herein by reference in its entirety.

### TECHNICAL FIELD

The present disclosure relates to the field of vehicle lighting and decoration, and in particular, to a vehicle-mounted ambient lamp.

### BACKGROUND

As an important part of vehicle lighting, a vehicle-mounted ambient lamp is used to decorate a vehicle to create an interior atmosphere in the vehicle and enhance a premium feel of the vehicle.

### SUMMARY

The following is a brief summary of subject matter described in detail herein. This summary is not intended to be limiting as to the scope of the claims.

The present disclosure provides a vehicle-mounted ambient lamp, including: a power substrate; a bottom cover disposed on a side of the power substrate; a protective cover disposed on a side of the power substrate away from the bottom cover; a light source disposed on the power substrate; and an optical lens disposed between the light source and the protective cover. The optical lens includes a bottom portion and at least two protruding portions, the at least two protruding portions are disposed on a same side of the bottom portion of the optical lens, and an axis of each of the at least two protruding portions is perpendicular to the bottom portion of the optical lens.

In an embodiment of the present disclosure, each of the at least two protruding portions is one or a combination of a cuboid, a cube, or a frustum of quadrilateral pyramid.

In an embodiment of the present disclosure, the at least two protruding portions are evenly spaced on the bottom portion of the optical lens.

In an embodiment of the present disclosure, a distance between every two adjacent protruding portions of the at least two protruding portions ranges from 3 mm to 10 mm.

In an embodiment of the present disclosure, the at least two protruding portions are light transmitting components, and a first optical texture is provided on an inner wall of the bottom portion close to the power substrate, so that light entering the bottom portion of the optical lens is reflected at the inner wall of the bottom portion of the optical lens, and enters the at least two protruding portions.

In an embodiment of the present disclosure, the optical lens further comprises a reflecting portion, the reflecting portion is disposed between the bottom portion of the optical lens and the light source, and the reflecting portion is connected to the bottom portion of the optical lens.

In an embodiment of the present disclosure, a first optical texture is provided on an inner wall of the reflecting portion, so that light emitted by the light source enters the reflecting portion, is reflected at the inner wall of the reflecting portion, and enters the bottom portion of the optical lens.

A second optical texture is provided on an inner wall of each of the at least two protruding portions close to the protective cover, enabling light passing through the at least two protruding portions to be uniform.

In an embodiment of the present disclosure, the optical lens further includes a light shielding member, the light shielding member is disposed on the bottom portion of the optical lens, the light shielding member and the at least two protruding portions are disposed on a same side of the bottom portion of the optical lens, and the light shielding member is filled between two adjacent protruding portions of the at least two protruding portions.

In an embodiment of the present disclosure, the light shielding member further covers an edge of the bottom portion of the optical lens, so that a portion of the bottom portion of the optical lens other than a portion of the bottom portion where the at least two protruding portions are disposed is opaque.

In an embodiment of the present disclosure, the reflecting portion, the light shielding member, the bottom portion, and the at least two protruding portions of the optical lens are integrally provided.

In an embodiment of the present disclosure, the vehicle-mounted ambient lamp further includes a trim strip arranged between the protective cover and the bottom cover.

In an embodiment of the present disclosure, the trim strip is opaque.

In an embodiment of the present disclosure, the trim strip, the protective cover, and the bottom cover are integrally provided.

In an embodiment of the present disclosure, the vehicle-mounted ambient lamp further includes an input wire harness, and the input wire harness is electrically connected to the power substrate.

Other aspects will be appreciated upon reading and understanding the accompanying drawings and detailed description.

### BRIEF DESCRIPTION OF DRAWINGS

To describe the technical solutions in the embodiments of the present disclosure more clearly, the drawings required in the description of the embodiments will be briefly described below, and it is apparent that the drawings in the following description are only some embodiments of the present disclosure. For those skilled in the art, other drawings can be obtained based on these drawings without any creative effort.
FIG. 1 is a schematic structural diagram of a vehicle-mounted ambient lamp according to an embodiment of the present disclosure.
FIG. 2 is a cross-sectional view of a vehicle-mounted ambient lamp according to an embodiment of the present disclosure.
FIG. 3 is a front view of an optical lens according to an embodiment of the present disclosure.
FIG. 4 is a side view of an optical lens according to an embodiment of the present disclosure.
FIG. 5 is a partial enlarged view of a protruding portion according to an embodiment of the present disclosure.
FIG. 6 is an exploded view of a vehicle-mounted ambient lamp according to an embodiment of the present disclosure.
FIG. 7 is a schematic diagram showing an appearance of a vehicle-mounted ambient lamp according to an embodiment of the present disclosure.

Description of reference signs:
10, bottom cover;
11, protective cover;
12, power substrate;
13, light source;
14, optical lens; 141, bottom portion; 142, protruding portion; 143, reflecting portion;
15, light shielding member;
16, trim strip;
17, fixing member;
18, input wire harness.

### DETAILED DESCRIPTION

The technical solutions in embodiments of the present disclosure will be clearly and completely described below with reference to accompanying drawings in the embodiments of the present disclosure, and it is apparent that the described embodiments are only a part of the embodiments of the present disclosure rather than all of the embodiments. All other embodiments, which are obtained by a person of ordinary skill in the art based on the embodiments of the present disclosure without creative efforts, shall fall within the protection scope of the present disclosure.

In the present disclosure, it should be noted that, the terms, such as "center", "upper", "lower", "left", "right", "vertical", "horizontal", "inner", "outer", and the like, if used, indicate an orientation or positional relationship based on that shown in the accompanying drawings, which is merely for the convenience of describing the present disclosure and simplifying the description, and does not indicate or imply that the device or element referred to must have a specific orientation, be constructed and operated in a specific orientation. Therefore, such terms cannot be understood as a limitation to the present disclosure. In addition, the terms, such as "first", "second", and the like, if used, are merely used for descriptive and distinguishing purposes only, and cannot be understood as indicating or implying relative importance.

The vehicle-mounted ambient lamp is generally a linear ambient lamp, which forms a continuous linear light emitting surface, which results in problems such as a monotonous light emitting effect, a lack of layering and a lack of premium feel in the light emitting effect of the vehicle-mounted ambient lamp, thereby being unable to enhance the experience of customers. An objective of the present disclosure is to provide a vehicle-mounted ambient lamp, which can enable the vehicle-mounted ambient lamp to present a light-emitting effect resembling that of black and white piano keys, enriching the light emitting effect of the ambient lamp, and enhancing the stereoscopic, hierarchical, and premium feel of the light emitting effect of the ambient lamp.

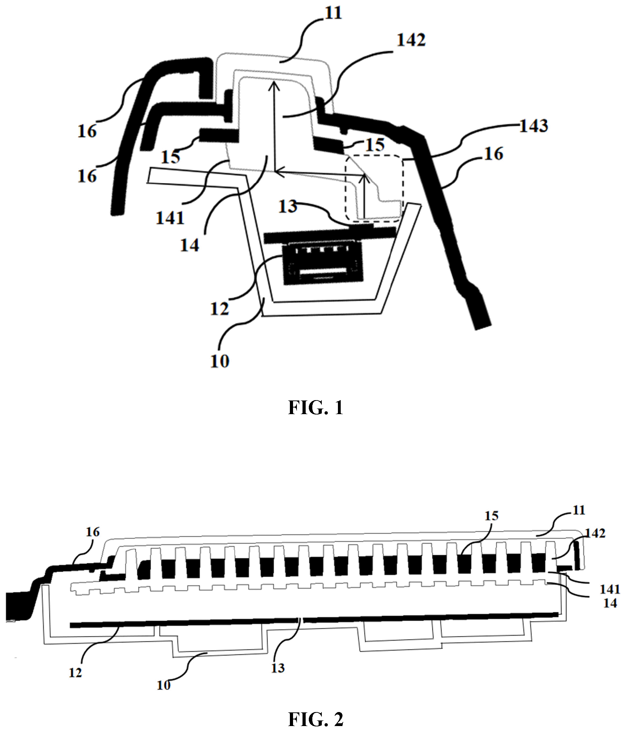

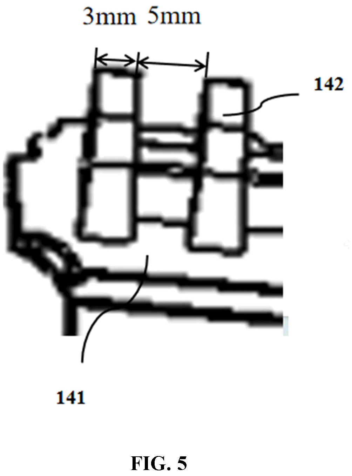

Referring to FIG. 1 to FIG. 7, the vehicle-mounted ambient lamp provided in embodiments of the present disclosure include, for example, a bottom cover 10, a protective cover 11, a power substrate 12, a light source 13, an optical lens 14, a light shielding member 15, a trim strip 16, a fixing member 17, an input wire harness 18, and the like. The optical lens 14 includes a bottom portion 141, at least two protruding portions 142 and a reflecting portion 143, an axis of each of the protruding portions 142 is perpendicular to the bottom portion 141, and the reflecting portion 143 is disposed between the bottom portion 141 and the light source 13. In an embodiment according to the present disclosure, the axis of the protruding portion 142 refers to a connecting line between a center of a surface of the protruding portion 142 away from the bottom portion 141 and a center of a projection of the protruding portion 142 onto the bottom portion 141. The vehicle-mounted ambient lamp provided by the present disclosure is mounted, for example, on a vehicle instrument panel, a door interior panel, and the like, through the bottom portion 141, the protruding portion 142, and the reflecting portion 143, the vehicle-mounted ambient lamp can present a light emitting effect similar to that of a structure of the black and white piano keys, thereby enhancing the stereoscopic, hierarchical, and premium feel of the light-emitting effect of the vehicle-mounted ambient lamp, and further improving the customer experience.

Referring to FIG. 1 and FIG. 2, in an embodiment of the present disclosure, the power substrate 12 is configured to arrange the light source 13 and connection lines inside the ambient lamp. In the embodiments of the present disclosure, the material of the power substrate 12 is, for example, one or a combination of glass fiber cloth, epoxy resin, ceramic, polytetrafluoroethylene, or the like, to improve the overall mechanical strength, heat resistance, and electrical insulation performance of the power substrate 12.

Referring to FIG. 1 and FIG. 2, in an embodiment of the present disclosure, the bottom cover 10 is disposed on a side of the power substrate 12 to provide shielding for the protective cover 11, the power substrate 12, the light source 13, the optical lens 14, the light shielding member 15, the fixing member 17, and the like, inside the ambient lamp, which prevents the internal components of the ambient lamp from being exposed, protects the internal components of the ambient lamp from external impact, avoids the safety hazards caused by the exposure of the internal components of the ambient lamp, and improves the aesthetic appearance of the ambient lamp. In an embodiment of the present disclosure, the material of the bottom cover 10 is, for example, one or a combination of polycarbonate, polypropylene, acrylic, or the like, to improve the mechanical performance, heat resistance and corrosion resistance of the ambient lamp. In an embodiment of the present disclosure, the bottom cover 10, the protective cover 11 and the trim strip 16 are, for example, integrally provided to improve the overall mechanical strength and impact resistance of a housing of the ambient lamp, but the present disclosure is not limited thereto.

Referring to FIG. 1 and FIG. 2, in the embodiments of the present disclosure, the protective cover 11 is disposed on a side of the power substrate 12 away from the bottom cover 10. The bottom cover 10, the protective cover 11, and the trim strip 16 define and enclose an internal area of the ambient lamp, so as to provide shielding for the power substrate 12, the light source 13, the optical lens 14, the light shielding member 15, the fixing member 17, and the like in the internal area of the ambient lamp, which prevents the impact, avoids the safety hazards caused by the exposure of the internal components of the ambient lamp, and improves the aesthetic appearance of the ambient lamp. In an embodiment of the present disclosure, for example, the protective cover 11 is formed by an in-mold injection molding process, but the present disclosure is not limited thereto, and the protective cover 11 may be formed by any suitable method known in the art. In an embodiment of the present disclosure, the material of the protective cover 11 includes, for example, one or more of light-transmitting materials such as polycarbonate and organic glass. In an embodiment of the present disclosure, for example, the protective cover 11 is a smoked and light-transmitting component to ensure the light transmittance of the protective cover 11 and enable the protective cover 11 to serve as a light emitting surface of the ambient lamp. Thus, the light emitted by the light source 13 is transmitted out through the protective cover 11, meeting the lighting requirements of customers. However, the present disclosure is not limited thereto, and the color of the protective cover 11 may be adjusted according to actual needs.

Referring to FIG. 1 and FIG. 2, in the embodiment of the present disclosure, the light source 13 is disposed on the power substrate 12 to serve as a light source of the ambient lamp. In an embodiment of the present disclosure, the light source 13 is, for example, an LED, which provides light for an ambient lamp.

Referring to FIG. 1 to FIG. 5, in an embodiment of the present disclosure, the optical lens 14 is disposed between the light source 13 and the protective cover 11, and is configured to focus or diffuse the light emitted by the light source 13, so as to improve the luminous intensity and luminance uniformity of the ambient lamp and meet the customer's lighting requirements. In an embodiment of the present disclosure, the optical lens 14 is, for example, one of a focusing optical lens or a light-homogenizing optical lens, or the optical lens 14 is, for example, a plano-convex lens, a positive concave-convex lens, an aspherical lens, a diffractive lens, a plano-concave optical lens, a biconcave optical lens, a reflective optical lens, or the like.

Referring to FIG. 1 to FIG. 5, in an embodiment of the present disclosure, the optical lens 14 includes a bottom portion 141, at least two protruding portions 142 and a reflecting portion 143. The protruding portions 142 are disposed on a same side of the bottom portion 141, an axis of each of the protruding portions 142 is perpendicular to the bottom portion 141, the reflecting portion 143 is disposed between the bottom portion 141 and the light source 13, and the reflecting portion 143 is connected to the bottom portion 141.

In an embodiment of the present disclosure, an inner wall of the bottom portion 141 close to the power substrate 12 and an inner wall of the reflecting portion 143 are both provided with, for example, a first optical texture. The first optical texture is, for example, a VDI (Verein Deutscher Ingenieure) texture. The VDI texture value of the first optical texture ranges from 20 to 40, for example. For example, in an embodiment of the present disclosure, the VDI texture value of the first optical texture may be 38 to reflect light.

In an embodiment of the present disclosure, an inner wall of the protruding portion 142 close to the protective cover 11 is provided with, for example, a second optical texture. The second optical texture is, for example, a VDI texture. The VDI texture value of the second optical texture ranges, for example, from 20 to 40. For example, in an embodiments of the present disclosure, the VDI texture value of the second optical texture is 28 to achieve the effect of uniform light.

In an embodiment of the present disclosure, the light emitted by the light source 13 first enters the reflecting portion 143. Since the first optical texture is disposed on the inner wall of the reflecting portion 143, the light is reflected by the reflecting portion 143 and then transmitted to the bottom portion 141. Since the first optical texture is disposed on the inner wall of the bottom portion 141 close to the power substrate 12, the light entering the bottom portion 141 is reflected to the inner wall of the protruding portion 142 close to the protective cover 11. Since the second optical texture is disposed on the inner wall of the protruding portion 142 close to the protective cover 11, the light passing through the protruding portion 142 is homogenized due to the second optical texture, and the uniform light passes through the protruding portion 142 and diffuses to the protective cover 11.

Referring to FIG. 2 to FIG. 5, in an embodiment of the present disclosure, the protruding portions 142 are, for example, evenly spaced on the bottom portion 141. A distance between two adjacent protruding portions 142 ranges from 3 mm to 10 mm, for example. For example, the distance between two adjacent protruding portions 142 may be 5 mm. The shape of the protruding portion 142 is, for example, one or a combination of polyhedrons such as a cuboid, a cube, a frustum of quadrilateral pyramid, and the like, but the present disclosure does not limit the shape of the protruding portion 142, and the shape of the protruding portion 142 may be selected according to the luminous effect presented by the ambient lamp. In an embodiment of the present disclosure, for example, the protruding portion 142 is a light-transmitting component, and the bottom portion 141 is an opaque component, so as to prevent the light emitted by the light source 13 from being transmitted out from the bottom portion 141, concentrate the light on the protruding portions 142 distributed at equal intervals and transmit the light out from the protruding portions 142, thereby enriching the luminous effect of the ambient lamp.

Referring to FIG. 1 to FIG. 5, in an embodiment of the present disclosure, for example, eighteen protruding portions 142 are disposed on the bottom portion 141, the protruding portions 142 are evenly spaced on the bottom portion 141, and the distance between two adjacent protruding portions 142 is 5 mm. In an embodiment of the present disclosure, the shape of the protruding portion 142 is, for example, a frustum of quadrilateral pyramid. The plane of the frustum of the quadrilateral pyramid of the protruding portion 142 on the side away from the bottom portion 141 is, for example, a rectangle, and the width of the rectangle is, for example, 3 mm. In an embodiment of the present disclosure, the light source 13 emits, for example, white light, the optical lens 14 further includes a light shielding member 15, the light shielding member 15 is disposed on the bottom portion 141 and is disposed on the same side of the bottom portion 141 as the protruding portion 142, the light shielding member 15 is filled between adjacent protruding portions 142, and the light shielding member 15 also covers the edge of the bottom portion 141, so that the bottom portion 141 becomes an opaque component, the light emitted by the light source 13 is prevented from being transmitted out from the bottom portion 141. Thus, the light is concentrated on the protruding portion 142, enabling the ambient lamp to present the light emitting effect of the black and white piano keys. In an embodiment of the present disclosure, the reflecting portion 143, the light shielding member 15, the bottom portion 141, and the protruding portion 142 are, for example, integrally provided.

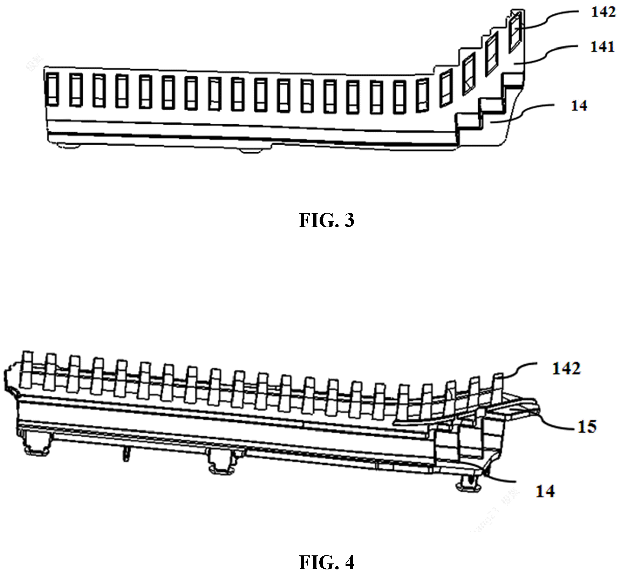

As shown in FIG. 2 and FIG. 4 of the present disclosure, a portion of the light shielding member 15 filled between adjacent protruding portions 142 may be a protrusion structure. In other words, the portion of the light shielding member 15 filled between adjacent protruding portions 142 is higher than a portion of the light shielding member 15 covering other areas of the bottom portion 141. In addition, the height of the protrusion structure of the light shielding member 15 from the bottom portion 141 is lower than the height of the protruding portion 142 from the bottom portion 141.

Referring to FIG. 1 and FIG. 2, in an embodiment of the present disclosure, the ambient lamp further includes a trim strip 16, and the trim strip 16 is, for example, disposed between the protective cover 11 and the bottom cover 10 to shield and protect the internal components of the ambient lamp, improve the aesthetic appearance of the ambient lamp, and avoid the safety hazards caused by the exposure of the internal components of the ambient lamp. In an embodiment of the present disclosure, the trim strip 16 may be opaque. For example, the surface of the trim strip 16 may be painted to improve the opacity of the trim strip 16, thereby concentrating the light emitted by the light source 13 on the protective cover 11 to avoid light scattering.

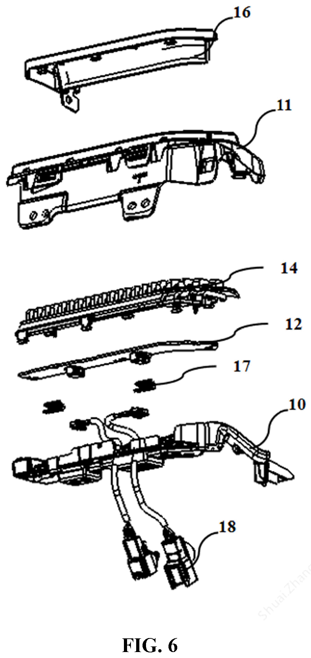

Referring to FIG. 1 and FIG. 6, in an embodiment of the present disclosure, the ambient lamp further includes a fixing member 17. The fixing member 17 is, for example, disposed between the bottom cover 10, the protective cover 11, the power substrate 12, the light source 13, the optical lens 14, the light shielding member 15, the trim strip 16, and the input wire harness 18 to connect internal components of the ambient lamp into a whole. In an embodiment of the present disclosure, the fixing member 17 is configured to connect corresponding components in one or a combination of connection manners such as a threaded connection, a pin connection, a welding connection, a snap-fit connection, an expansion connection, a rivet connection, or the like, so as to stably connect internal components of the ambient lamp. In this embodiment, for example, the fixing member 17 may connect the corresponding components in the snap-fit connection manner, and in this case, a material of the snap-fit member is, for example, a metallic material, to improve mechanical performance of the fixing member 17.

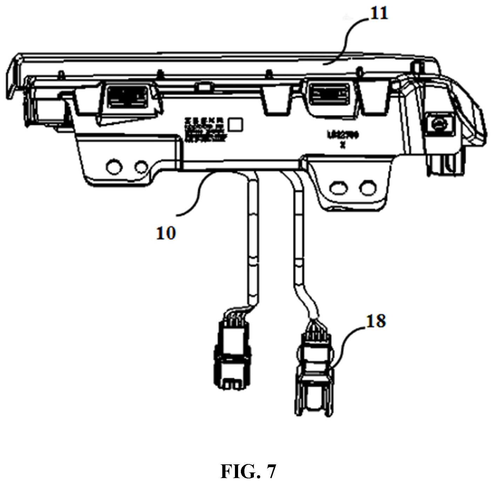

Referring to FIG. 6 and FIG. 7, in an embodiment of the present disclosure, the ambient lamp further includes an input wire harness 18. One end of the input wire harness 18 passes through the bottom cover 10 and is electrically connected to the power substrate 12. The other end of the input wire harness 18 away from the bottom cover 10 is connected to an external power supply, which supplies power to the ambient lamp and drives the light source 13 on the power substrate 12 to emit light.

In summary, the present disclosure provides an ambient lamp. Through the bottom portion and the at least two protruding portions perpendicular to the bottom portion, the ambient lamp can present the light emitting effect of the black and white piano keys, thereby enriching the light emitting effect of the ambient lamp, improving the stereoscopic, hierarchical and premium feel of the light emitting effect of the ambient lamp, and further improving the customer experience.

It is apparent that those skilled in the art can make various modifications and changes to the embodiments of the present disclosure without departing from the spirit and scope of the present disclosure. The embodiments of the present disclosure disclosed above are merely used to better explain the principles and practical applications of the present disclosure, so that those skilled in the art can well understand and utilize the present disclosure, and are not intended to limit the present disclosure. The present disclosure is limited only by the full scope of the claims and their equivalents.

## Claims

1. A vehicle-mounted ambient lamp, comprising:
a power substrate;
a bottom cover disposed on a side of the power substrate;
a protective cover disposed on a side of the power substrate away from the bottom cover;
a light source disposed on the power substrate; and
an optical lens disposed between the light source and the protective cover, wherein the optical lens comprises a bottom portion and at least two protruding portions, the at least two protruding portions are disposed on a same side of the bottom portion of the optical lens, and an axis of each of the at least two protruding portions is perpendicular to the bottom portion of the optical lens.

2. The vehicle-mounted ambient lamp according to claim 1, wherein each of the at least two protruding portions is one or a combination of a cuboid, a cube, or a frustum of quadrilateral pyramid.

3. The vehicle-mounted ambient lamp according to claim 1 or 2, wherein the at least two protruding portions are evenly spaced on the bottom portion of the optical lens.

4. The vehicle-mounted ambient lamp according to any one of claims 1 to 3, wherein a distance between every two adjacent protruding portions of the at least two protruding portions ranges from 3 mm to 10 mm.

5. The vehicle-mounted ambient lamp according to any one of claims 1 to 4, wherein the optical lens further comprises a reflecting portion, the reflecting portion is disposed between the bottom portion of the optical lens and the light source, and the reflecting portion is connected to the bottom portion of the optical lens.

6. The vehicle-mounted ambient lamp according to claim 5, wherein a first optical texture is provided on an inner wall of the reflecting portion, so that light emitted by the light source enters the reflecting portion, is reflected at the inner wall of the reflecting portion, and enters the bottom portion of the optical lens.

7. The vehicle-mounted ambient lamp according to any one of claims 1 to 6, wherein the at least two protruding portions are light transmitting components, and a first optical texture is provided on an inner wall of the bottom portion close to the power substrate, so that light entering the bottom portion of the optical lens is reflected at the inner wall of the bottom portion of the optical lens, and enters the at least two protruding portions.

8. The vehicle-mounted ambient lamp according to any one of claims 1 to 7, wherein a second optical texture is provided on an inner wall of each of the at least two protruding portions close to the protective cover, enabling light passing through the at least two protruding portions to be uniform.

9. The vehicle-mounted ambient lamp according to any one of claims 1 to 8, wherein the optical lens further comprises a light shielding member, the light shielding member is disposed on the bottom portion of the optical lens, the light shielding member and the at least two protruding portions are disposed on a same side of the bottom portion of the optical lens, and the light shielding member is filled between two adjacent protruding portions of the at least two protruding portions.

10. The vehicle-mounted ambient lamp according to claim 9, wherein the light shielding member further covers an edge of the bottom portion of the optical lens, so that a portion of the bottom portion of the optical lens other than a portion of the bottom portion where the at least two protruding portions are disposed is opaque.

11. The vehicle-mounted ambient lamp according to claim 9 or 10, wherein the reflecting portion, the light shielding member, the bottom portion, and the at least two protruding portions of the optical lens are integrally provided.

12. The vehicle-mounted ambient lamp according to any one of claims 1 to 11, further comprising a trim strip arranged between the protective cover and the bottom cover.

13. The vehicle-mounted ambient lamp according to claim 12, wherein the trim strip is opaque.

14. The vehicle-mounted ambient lamp according to claim 12, wherein the trim strip, the protective cover, and the bottom cover are integrally provided.

15. The vehicle-mounted ambient lamp according to any one of claims 1 to 14, further comprising an input wire harness electrically connected to the power substrate.
